# EUROPEAN PATENT SPECIFICATION

(11) **EP 0 635 399 B1**
(45) Date of publication and mention of the grant of the patent: **12.05.1999**
(21) Application number: 94202076.9
(22) Date of filing: 16.07.1994
(51) Int. Cl.: B60R 16/02

(54) **Electronic control device for a gasoline level indicator**
Elektronisches Steuergerät zur Benzinstand-Anzeige
Appareil de commande électronique pour un indicateur de niveau d'essence

(30) Priority: 22.07.1993 IT MI930602 U
(43) Date of publication of application: 25.01.1995
(73) Proprietor: BITRON S.p.A., 10042 Nichelino (Torino) (IT)
(72) Inventor: Bianco, Giovanni, I-10060 Cantalupa (Torino) (IT)
(74) Representative: Fusina, Gerolamo

(56) References cited:
- EP-A- 0 319 826
- WO-A-87/07333
- FR-A- 2 119 239
- US-A- 4 344 136
- US-A- 5 121 112
- US-A- 5 121 324

## Description

This invention relates to an electronic control device for a gasoline level indicator.

Various known indicator devices used in automobiles are operationally associated with their tank.

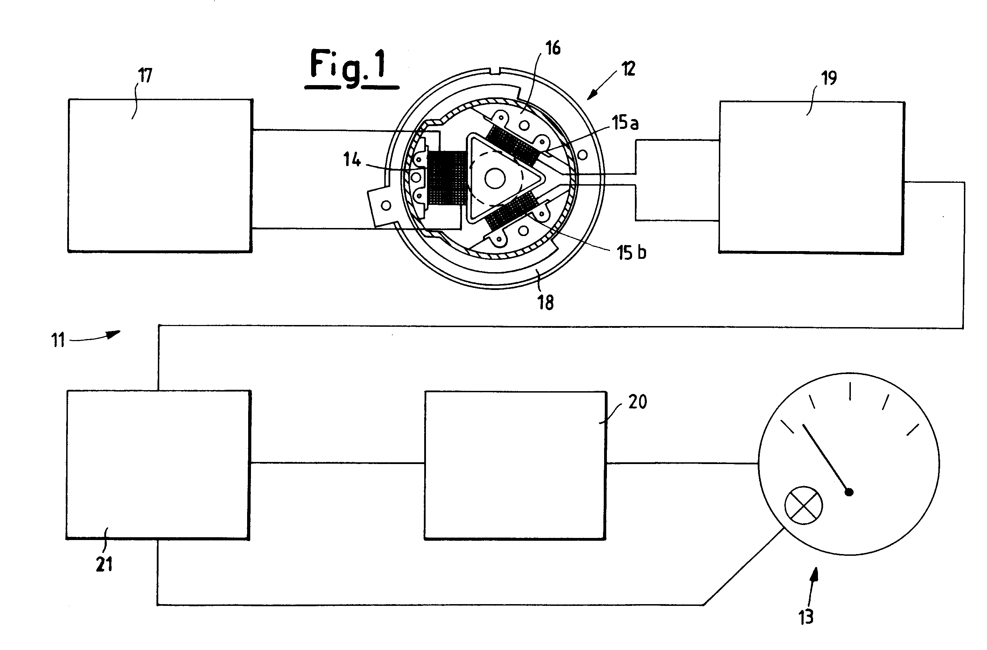

In this respect, Figure 1 shows a general block diagram of the circuit of such a known device. Devices of this kind generally comprise an electronic circuit, indicated overall by 11, connected between a probe 12 and an indicator 13, which can be a digital or analog indicator according to preference.

The probe 12 is a rotary electrical transducer, or a differential transformer consisting of a primary winding 14 and two secondary windings 15a and 15b wound in opposite directions on a stator 16. The primary winding 14 of the probe 12 is powered by a sinusoidal voltage generator 17, with the result that the output across the ends of the two secondary windings 15a and 15b is a variable-amplitude voltage in phase with the rotation of a rotor 18. The said secondary windings 15a, 15b are connected to a synchronous demodulator 19 which supplies at its output a linear d.c. voltage proportional to the angle and direction of rotation of the probe 12.

The synchronous demodulator 19 is further connected to a variable transductance circuit 20 to be able to control the indicator 13.

In addition, a circuit 21 which corrects for the shape of the tank is connected between the circuit 20 and the demodulator 19 to linearize the indication of a level indicator or meter, not shown in the figure, so correcting and adapting its response, it being provided with the probe 12. The circuit 21 can obviously be modified both for reliability for other tank shapes and for adapting the fuel level meter.

For example, US 4,344,136 describes an on-board vehicular data processing system that samples vehicular operating parameters, such as fuel level and calculates values of other parameters, such as range and travel time; system parameters may be stored for future reference. It comprises sensing means for picking up the operational data, data processing means for receiving the operational data, means for displaying the data and means for storing values of the operational parameters. However, said data processing system uses a large quantity of electronic devices and, moreover, it cannot be located in an engine compartment, for example, of an automobile, because of its overall dimensions.

Therefore, it is not possible to handle all the functions of such a device within the engine compartment, next to the gasoline pump but, on the contrary, said device has the inconvenience of providing connections of electric wires passing from the engine compartment to the instrumental panel of the automobile within the vehicle passenger compartment.

The main object of the present invention is to provide an electronic control circuit which besides controlling the gasoline level indicator can also perform other control functions within the engine compartment.

Another object of the present invention is to provide an electronic control circuit, which comprises a smaller quantity of electronic devices, with respect to the prior art, in order to locate it in an engine compartment, for example of an automobile, next to the gasoline pump, without providing long connections of electric wires passing from the engine compartment to the vehicle passenger compartment.

This object is attained according to the present invention by an electronic control device for a gasoline level indicator, as claimed in claim 1.

The structural and operational characteristics and advantages of a device according to the present invention will be more apparent from the description thereof given hereinafter by way of non-limiting example with reference to the accompanying schematic diagrams, in which:
Figure 1 is a general block diagram of a known gasoline level indicator circuit; and
Figure 2 is a block diagram of an electronic control device for a gasoline level indicator, according to the present invention.

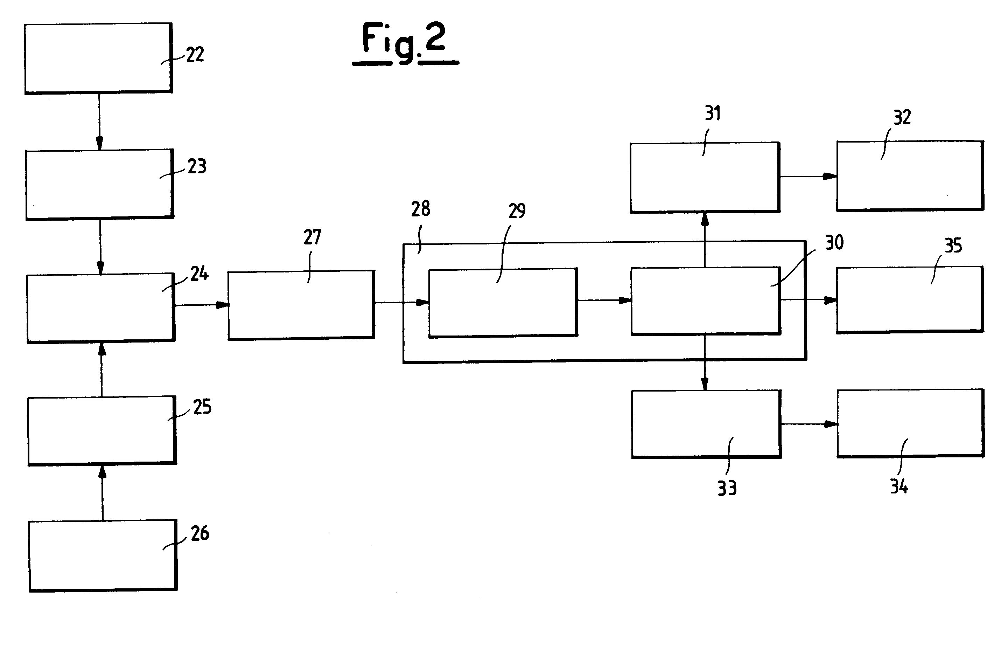

An electronic control device shown in Figure 2 consists of a sinusoidal wave generator 22 with its output connected to a driver 23 for an electromagnetic transducer 24. In addition to the control signals, the transducer 24 also receives signals relative to the position of a float 25. In this respect, each float position depends on data 26 relative to the fuel longitudinally at any moment.

The electromagnetic transducer 24 transmits the signals relative to the position of the float 25 to an electronic conditioning circuit 27 in accordance with the logic of the driver 23. Via this electronic circuit the electromagnetic transducer 24 communicates with a microprocessor 28 controlling the other components of the device.

In this respect, the microprocessor 28 structure comprises internally an A/D converter 29 positioned between the output of the electronic conditioning circuit 27 and an operating and control element 30. This latter element 30 comprises various components for handling and processing the data received. Support software is also provided to ensure completely automatic operation.

The microprocessor 28, or rather the operating and control element 30, operates an electronic driver 31 for a level indicator 32 and also an electronic driver 33 for a fuel reserve warning element 34.

The whole electronic control device for a gasoline level indicator according to the present invention is located in the immediate vicinity of the gasoline pump in the engine compartment. By adding suitable modules to the microprocessor 28, ie connecting these to the operating and control element 30, the same device is also able to handle other functions within it. This facility for controlling other devices is shown for simplicity as a single block 35 positioned at the output of the microprocessor 28 and internally comprises various modules.

By means of these modules the device of the present invention is able to control the rotational speed of the fuel suction pump on the basis of the automobile rpm. The pump motor can be of direct current or brushless type.

The electronic circuit can also control a solenoid valve, so that in the case of pump stoppage following a violent collision, accident or overturning of the automobile it opens the solenoid valve to block fuel delivery and discharge into the tank the fuel subjected to the residual pressure otherwise always present in the line between the tank and fuel injectors.

The electronic control device or rather its modules can halt the pump after a certain predetermined time if the engine has stopped but with the starting key still turned on.

Finally, the electronic circuit can also control a fuel throughput signal originating from a flowmeter.

It is apparent that the main advantage of the device of the invention is its facility for handling all said functions within the engine compartment in the immediate vicinity of the elements themselves. This avoids the inconvenience of a bulky classical control device plus connections by electric wires passing from the engine compartment to the instrument panel within the vehicle passenger compartment.

## Claims

1. An electronic control device for a gasoline level indicator of an automobile, comprising a sinusoidal wave generator (22), the output of which is connected to a driver (23) for an electromagnetic transducer (24), said electromagnetic transducer (24) receiving electric signals relative to the positions of a float (25), each of said position depending on data (26) corresponding to one fluid level at one fixed moment, said electromagnetic transducer (24) also transmitting electric signals relative to the positions of said float (25) to an electronic conditioning circuit (27), in accordance with an electronic logic of said driver (23), said conditioning circuit (27) being connected to one microprocessor (28), said microprocessor (28) comprising an A/D converter (29), that is positioned between the output of said electronic conditioning circuit (27) and an operating and control circuit (30) for handling and processing the data received, said operating and control circuit (30) operating an electronic driver (31) for a level indicator (32) and an electronic driver (33) for a fuel reserve warning element (34), characterised in that said operating and control circuit (30) is also connected to at least one suitable module (35) for controlling at least one further element of the automobile, the whole electronic control device being located in an engine compartment of the automobile, in the immediate vicinity of a fuel pump.

2. A device as claimed in claim 1, characterised in that said operating and control circuit (30) controls the rotational speed of said fuel pump on the basis of the automobile rpm (revolutions per minute).

3. A device as claimed in claim 1, characterised in that said operating and control circuit (30) controls the opening and the closure of a solenoid valve for blocking delivery of and for discharging into a tank the fuel, in the case of pump stoppage.

4. A device as claimed in claim 1, characterised in that said operating and control circuit (30) halts said fuel pump after a certain predetermined time if the engine of the automobile has stopped but with a starting key still turned on.

## Patentansprüche

1. Elektronisches Steuerungsgerät zur Benzinstand-Anzeige eines Kraftfahrzeuges mit einem Wellengenerator (22) für sinusförmige Wellen, dessen Ausgang mit einem Treiber (23) für einen elektromagnetischen Meßwertgeber (24) verbunden ist, wobei der elektromagnetische Meßwertgeber (24) elektrische Signale entsprechend den Stellungen eines Schwimmers (25) empfängt und jede der besagten Stellung von Daten (26) abhängt, die einem Flüssigkeitspegel in einem bestimmten Moment entsprechen, wobei der elektromagnetische Meßwertgeber (24) elektrische Signale entsprechend den Stellungen eines Schwimmers (25) überträgt zu einem elektronischen Anpassungskreis (27), im Einklang mit einer elektronischen Logik des besagten Treibers, und der besagte elektronische Anpassungskreis (27) mit einem Mikroprozessor (28) verbunden ist, welcher Mikroprozessor (28) einen A/D-Wandler (29) umfaßt, der zwischen dem Ausgang des besagten elektronischen Anpassungskreises (27) und einem Arbeits- und Steuerkreis (30) zur Behandlung und Verarbeitung der erhaltenen Daten angeordnet ist, welcher Arbeits- und Steuerkreis (30) einen elektronischen Treiber (31) für eine Pegelanzeige (32) und einen elektronischen Treiber (33) für ein Kraftstoffreserve-Warnelement (34) ansteuert,
dadurch gekennzeichnet, daß
der besagte Arbeits- und Steuerkreis (30)ebenfalls mit wenigstens einem geeigneten Modul (35) zur >Steuerung von wenigstens einem weiteren Teil des Kraftfahrzeuges verbunden ist, wobei das gesamte elektronische Steuergerät in einem Motorraum des Kraftfahrzeuges in unmittelbarer Nachbarschaft zur Kraftstoffpumpe angeordnet ist.

2. Steuergerät nach Anspruch 1, dadurch gekennzeichnet, daß besagter Arbeits- und Steuerkreis (30) die Drehgeschwindigkeit der Kraftstoffpumpe in Abhängigkeit von der Motordrehzahl (U min⁻¹) des Kraftfahrzeuges steuert.

3. Steuergerät nach Anspruch 1, dadurch gekennzeichnet, daß besagter Arbeits- und Steuerkreis (30) das Öffnen und das Schließen eines Magnetventils steuert, das zum Unterbrechen der Förderung von Kraftstoff und zum Entleeren in einen Tank dient im Falle eines Stillstands der Pumpe.

4. Steuergerät nach Anspruch 1, dadurch gekennzeichnet, daß besagter Arbeits- und Steuerkreis (30) die Kraftstoffpumpe nach einer vorbestimmten Zeit zum Halten bringt, falls der Motor des Kraftfahrzeuges gestoppt ist, aber mittels eines Zündschlüssels noch eingeschaltet ist.

## Revendications

1. Dispositif de commande électronique pour un indicateur de niveau d'essence d'une automobile, comprenant un générateur de signaux sinusoïdaux (22), dont la sortie est connectée à une commande (23) pour un transducteur électromagnétique (24), ledit transducteur électromagnétique (24) recevant des signaux électriques relatifs aux positions d'un flotteur (25), chacune desdites positions dépendant de données (26) correspondant à un niveau de fluide à un moment fixé, ledit transducteur électromagnétigue (24) transmettant également des signaux électriques relatifs aux positions dudit flotteur (25) à un circuit de conditionnement électronique (27), conformément à une logique électronique de ladite commande (23), ledit circuit de conditionnement (27) étant relié à un microprocesseur (28), ledit microprocesseur (28) comprenant un convertisseur A/N (29) qui est placé entre la sortie dudit circuit de conditionnement électronique (27) et un circuit d'exploitation et de contrôle (30) pour manipuler et traiter les données reçues, ledit circuit d'exploitation et de contrôle (30) actionnant une commande électronique (31) pour un indicateur de niveau (32) et une commande électronique (33) pour un élément d'alerte de réserve de carburant (34), caractérisé en ce que ledit circuit d'exploitation et de contrôle (30) est également relié à au moins un module approprié (35) pour contrôler au moins un autre élément de l'automobile, tout le dispositif de commande électronique étant situé dans un compartiment moteur de l'automobile, à proximité immédiate d'une pompe à carburant.

2. Dispositif selon la revendication 1, caractérisé en ce que ledit circuit d'exploitation et de contrôle (30) contrôle la vitesse de rotation de ladite pompe à carburant sur la base des tours/minute de l'automobile.

3. Dispositif selon la revendication 1, caractérisé en ce que ledit circuit d'exploitation et de contrôle (30) contrôle l'ouverture et la fermeture d'une vanne à solénoïde destinée à bloquer la délivrance de carburant et pour l'envoyer dans un réservoir en cas d'arrêt de la pompe.

4. Dispositif selon la revendication 1, caractérisé en ce que ledit circuit d'exploitation et de contrôle (30) contrôle arrête ladite pompe à carburant après une période de temps prédéterminée si le moteur de l'automobile s'est arrêté, mais une clé de contact est encore en position de marche.
